# EUROPEAN PATENT SPECIFICATION

(11) **EP 1 453 706 B1**
(45) Date of publication and mention of the grant of the patent: **19.04.2006**
(21) Application number: 02805064.9
(22) Date of filing: 14.11.2002
(51) Int. Cl.: B60R 21/26

(54) **OPENING DEVICE FOR A COLD GAS INFLATOR**
ÖFFNUNGSVORRICHTUNG FÜR EINE KALTGASAUFBLASVORRICHTUNG
DISPOSITIF D'OUVERTURE POUR DISPOSITIF DE GONFLAGE A GAZ FROID

(30) Priority: 14.12.2001 US 17022; 03.10.2002 US 262976
(43) Date of publication of application: 08.09.2004
(73) Proprietor: KEY SAFETY SYSTEMS, INC., Sterling Heights, Michigan 48314 (US)
(72) Inventor: KELLY, Michael, Eugene, Valrico, FL 33594 (US); MCLEOD, William, Francis, II, Riverview, FL 33569 (US); CURTIS, Anthony, J., Palm Harbor, FL 34684 (US); MULVILLE, Michael, Felix, Bartow, FL 33830 (US)
(74) Representative: Gislon, Gabriele
(86) International application number: PCT/US2002/036404
(87) International publication number: WO 2003/051685

(56) References cited:
- DE-A- 4 410 574
- US-A- 3 961 806
- US-A- 5 941 562
- US-B1- 6 227 562

## Description

The present invention relates generally to safety devices to protect occupants of moving vehicles. More particularly, the present invention relates to an opening device for a cold gas inflator.

The ability of a gas storage device to rapidly release gas is a very important feature in various technologies. Examples of such technologies include vehicle occupant inflatable restraints, fire suppression systems, and emergency air containers.

In the field of vehicle occupant inflatable restraints, the cold gas inflator inflates a vehicle airbag by releasing stored gas. The stored gas generally comprises one or more inert gases such as argon or helium, and in the event of an automobile crash, the stored gas exits the cold gas inflator and flows into an airbag, which causes the airbag to inflate. Since cold gas inflators release stored gas, these inflators do not have the problems typically associated with other types of inflators such as toxic gas and hot inflation gas.

Cold gas inflators are suitable for use in inflating curtain, thorax, and head and thorax airbags. Curtain airbags are mounted in the roof of a vehicle and when inflated, protect the occupant's head. Thorax airbags are mounted lower than curtain airbags and are generally mounted in vehicle seats.

Cold gas inflators are equipped with a discharge opening, and the stored gas must travel through this passageway to exit the pressure vessel. Typically, the discharge opening has a blocking member, which prevents the stored gas from passing through the discharge opening and escaping the pressure vessel. During an automobile crash, an opening device must quickly remove the blocking member to allow the airbag to be rapidly deployed. It is paramount that the opening device be reliable so that the actuation of an opening device always yields an unblocked discharge opening. Along with being reliable, it is desirable for the opening device to be made from as few parts as possible. As an example, an opening device operates by removing a support for a sealing element. Once the sealing element loses its support, the sealing element ceases to block the discharge opening and the stored gas is able to flow through the discharge opening. This type of opening device is known from US 6 247 725 B1 showing the features of the preamble of claim 1. Another type of opening device works by generating a shock wave. The inflator in WO 01/42047 A2 uses a shock wave to open a burst disk, which causes the stored gas to escape from the gas vessel. The inflator in US 5 022 674 A also uses a shock wave to break the disk permitting inflation gas to exit the pressure vessel.

US-A-6,227,562 discloses an inflator comprising a primary and a secondary container for inflation fluid. Both containers include a burst disk. The burst disk of the primary container becomes ruptured in case of an auto crash by means of an initiator actuated by sensing means. The burst disk of the secondary container is ruptured by a needle actuated by the increased pressure in the central chamber being in fluid communication with both the primary and secondary container.

DE-A-4410574 discloses a pressure vessel for the actuation of an air bag, which is divided into two chambers by an orifice plate having an orifice. The transversal section for the gas flow through said orifice is smaller than the transversal section of the outlet vent in order to obtain a pressure difference in said two chambers for ensuring the inflated state of the air bag for a long period of time.

Problems left unsolved in the prior art are overcome by an inflator as described in the attached claim 1.

### Brief Description of the Drawings

FIG. 1 is a cross sectional schematic diagram of a radial flow cold gas inflator.
FIG: 2 is another embodiment of the radial flow cold gas inflator in FIG. 1.
FIG. 3 is similar to FIG. 1 except that the orifice plate is located further upstream in the pressure vessel.
FIG. 4 is a cross sectional schematic diagram of an axial flow cold gas inflator.
FIG. 5 is another embodiment of the axial flow cold gas inflator in FIG 4.
FIG. 6 is similar to FIG. 4 except that the cold gas inflator has a flow diverter.

### Detailed Description of the Invention

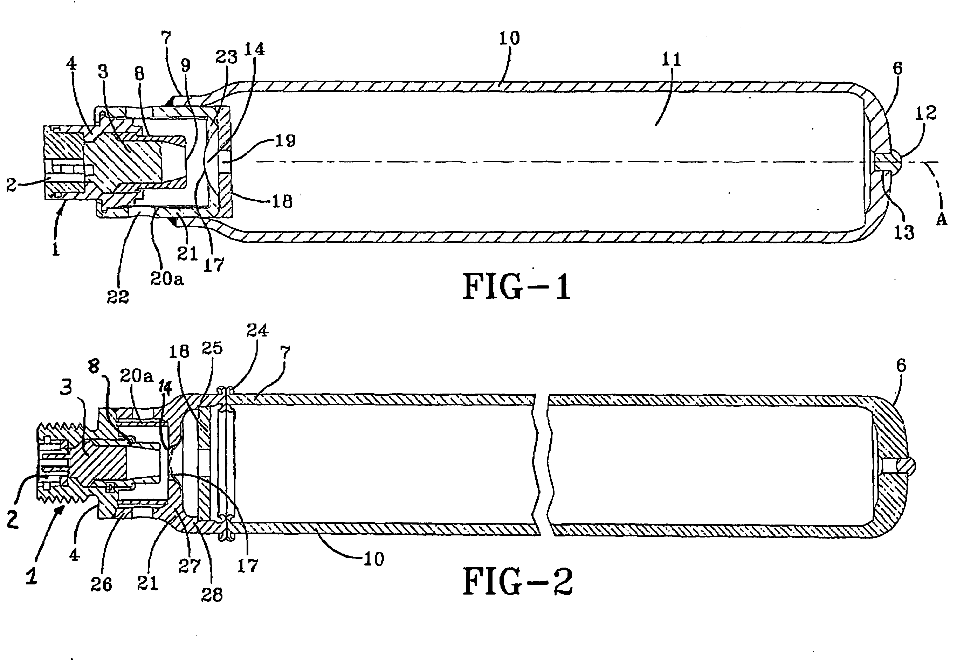

FIG. 1 shows a cold gas inflator not claimed by the application for use in an automotive safety restraint system. The cold gas inflator has a first cylindrical member 21 attached to a second cylindrical member 10. A burst disk is fixedly attached to the first cylindrical member, whereby the burst disk, the first cylindrical member, and the second cylindrical member define a pressure vessel, The pressure vessel is filled with stored gas 11, which is released from the inflator during an automobile crash to inflate a vehicle airbag. The second cylindrical member 10 has a generally cylindrical shape with a circular cross section. The second cylindrical member 10 may be formed of stainless steel, low carbon steel, or any other suitable material, which has sufficient strength and extremely low permeability to the stored gas.

The ideal characteristics for the stored gas 11 are that the gas is inert, is not highly temperature sensitive, and has a high inflation speed. According to the present invention, the storage pressure of the inert gas is approximately 62053 kPa. It is possible to design a cold gas inflator that operates property under a pressure between 3447 kPa and 82740 kPa using either an inert or diatomic gas.

The stored gas can include one or more gases, which include argon, neon, xenon, helium and nitrogen. Preferably, the stored gas is 100% helium. The pressure vessel may be filled with a mixture of argon and helium gas.

The pressure vessel is filled with stored gas 11 through the gas fill port 13 in the first end 6 of the second cylindrical vessel. The gas fill port is sealed by a plug 12 made from carbon steel to prevent gas from escaping after the pressure vessel has been filled to the desired pressure. It is preferred that the plug is secured to the gas fill port 13 by a resistance weld, but one skilled in the art realizes that other types of welding could be utilized to fuse the plug 12 to the second cylindrical member 10. The gas fill port 13 is located on a first end 6 of the second cylindrical member 10, and a first cylindrical member 21 is connected to the second end 7 of the second cylindrical member 10.

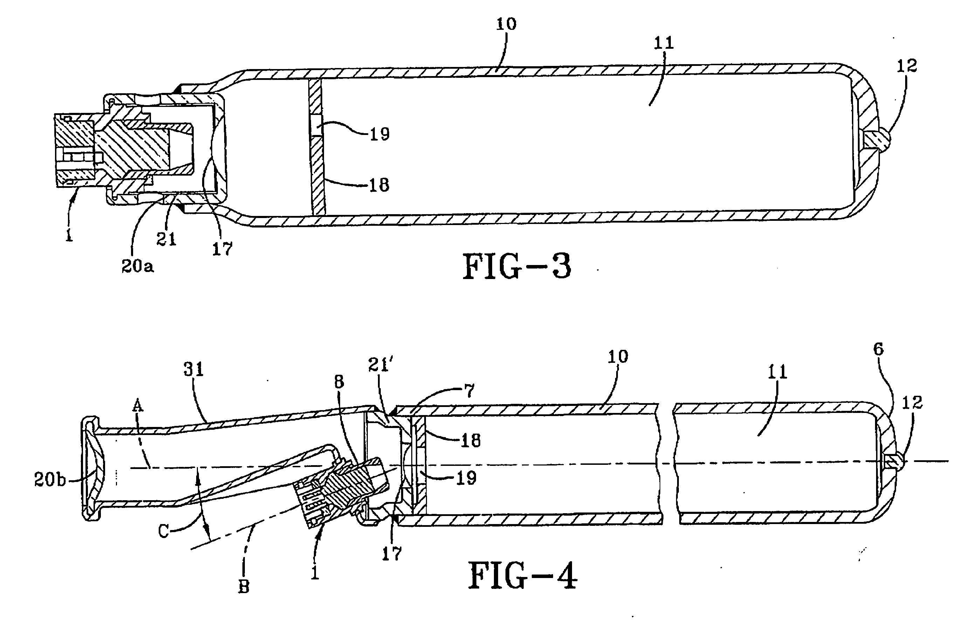

In FIG. 1 the opening device is attached to a first cylindrical member 21. The first cylindrical member 21 may be formed of stainless steel, low carbon steel, or any other suitable material having sufficient structural strength. The first cylindrical member 21 is telescopically inserted into the second cylindrical member 10. The first cylindrical member 21 is connected to the second cylindrical member 10 by a circumferential weld, preferably a TIG (tungsten inert gas) weld, but other suitable welding techniques may be employed. FIG. 2, shows an inflator according to the invention wherein the first cylindrical member 21 and the second cylindrical member 10 are attached to one another in a different manner than in FIG. 1, The pressure vessel portion 25 of the first cylindrical member 21 is friction welded to the second end 7 of the second cylindrical member 10. The pressure vessel portion 25 of the first cylindrical member 21 and the second cylindrical member 10 have substantially the same radius. As a result of the friction welding process, curls 24 are formed from the displaced metal that extend both outward and inward from the butt joint. The cold gas inflators show two approaches to attaching the first cylindrical member 21 and the second cylindrical member 10, however, one skilled in the art appreciates that other approaches may be employed such as telescopically inserting the second end 7 of the second cylindrical member 10 into the first cylindrical member 21. The storage pressure and other features of the inert gas one as previously mentioned.

In FIG. 1 the burst disk 17 is attached to the legs 23 of the first cylindrical member 21. The legs 23 of the first cylindrical member 21 are referred to as "legs" because this structure partially resembles "legs" when viewed under a cross section. The burst disk 17 has a flat shape, but the burst disk flexes towards the opening device 1 when the pressure vessel is filled. The inner most portion of the legs 23 have a curvilinear shape and the burst disk adopts a complimentary shape thereto during the filling of the pressure vessel with gas. The stored gas 11 applies uniform force against the burst disk resulting in its dome shape configuration. In order to decrease the filling time for the pressure vessel, the legs 23 are able to bend during the filling of the pressure vessel thus distributing the load to the burst disk preventing pre-mature rupture of the burst disk 17 during filling. After filling of the pressure vessel, the legs 23 do not return to their original shape. Preferably, the legs 23 bend approximately 4 degrees. Instead of relying on the stored gas to bulge the burst disk, the burst disk may be pre-formed or pre-bulged before being attached to the legs 23 of the first cylindrical member 21. An example of a process of pre-forming the burst disk is the hydroforming process. Utilizing the pre-forming method, the gas fill rate for the pressure vessel may be increased without risk of pre-maturely failing the burst disk 17. In FIG. 2, the burst disk 17 is attached to the annular end plate 27 of the first cylindrical member 21.

A burst disk 17 seals the discharge opening 14 and prevents the stored gas 11 from escaping the pressure vessel after it is filled with gas. The legs 23 of the first cylindrical member 21 define the discharge opening 14. For the present invention, the burst disk must meet the following constraints. The burst disk must survive 1.1 times production fill rate or greater. The burst disk must meet USCAR 4500 pressure cycles with no helium leak. The burst disk must open reliably at -40 °C. Lastly, the burst disk must hydro-burst at a minimum pressure of 1.25 times the proof pressure and a maximum of 0.8 times the minimum pressure vessel hydro-burst pressure. According to the present invention, the burst disk may be made from stainless steel, inconel material, monel material or any other suitable material that meets the aforementioned constraints. The hardness of the burst disk should be between "half hard" and "full hard" to minimize burst disk thickness. Hardness is the degree to which a metal will resist cutting, abrasion, penetration, bending and stretching. The indicated hardness of metals will differ somewhat with the specific apparatus and technique of measuring. The preferred thickness for the burst disk is 0.203 mm for 41,370 kPa ambient fills and 0.254 mm for 62053 kPa ambient fills. The burst disk is attached to the first cylindrical member 21 by a YAG Laser but could be attached by other welding techniques.

The opening device 1 comprises an electrically actuated igniter 3, an end cap 4, and optionally an igniter nozzle 8. The opening device 1 is positioned so that the longitudinal axis of the opening device is essentially parallel with a longitudinal axis of the first cylindrical member 10. The igniter 3 communicates with a central processing unit (not shown), which in turn communicates with a sensor means (not shown). The sensor means can be of any type presently used in the art to sense a crash or sudden deceleration of a vehicle. The electric firing pins 2 are insulated from one another and connected by a bridge wire (not shown). The bridge wire is preferably embedded in one or more layers of pyrotechnic compositions designed to generate a shockwave to rupture the burst disk 17. An example of a suitable pyrotechnic composition or ignition material for the present invention is zirconium potassium perchlorate or ZPP, however, one skilled in the art realizes that other ignition material could be used in the present invention. Examples of igniter suppliers include SDI and EMS-Patvag. The preferred embodiment for the present invention has a bridge wire igniter, but a semiconductor bridge igniter or a smart igniter can also be used.

An end cap 4 houses the igniter 3. In FIG. 1 the igniter 3 is crimped to the end cap. In contrast, the cold gas inflator as seen in FIG. 2 shows the igniter 3 being welded to the first cylindrical member 21. The preferred welding type is MIG weld, but it is appreciated that other welding types may be employed. Also, the igniter can be connected by screwing or other suitable attachment means without departing from the scope of the present invention.

The opening device 1 may also comprise an igniter nozzle 8 for directing an output energy from the ignition of the ignition material towards the burst disk 17. In FIG. 1 the nozzle is tapered inward in the direction of the burst disk 17. Without the igniter nozzle 8, the igniter would still rupture the burst disk 17 but will need to be loaded with extra ignition material. It is also possible to utilize an igniter with reinforced walls, which would eliminate the need for a nozzle 8. These reinforcement walls would act in a similar fashion to the nozzle 8 by focusing the output energy in the direction of the burst disk 17.

In FIG. 1 the nozzle 8 is attached to the end cap 4 by crimping, but other methods of attachment are suitable such as press fit or welding. The nozzle is preferably made from standard carbon steel and has an opening 9 that is less than the size of the discharge opening 14, with a preferred range of 2 mm to 8 mm.

Upon the detection of a crash or a sudden deceleration, the burst disk 17 is ruptured by the opening device 1. The ignition material is ignited by a bridgewire. The explosion of the ignition material generates a shockwave that breaks apart the burst disk 17. In order for the burst disk 17 to rupture, the opening device 1 is disposed less than 8.0 mm away from a center of the fully domed burst disk. Once the burst disk 17 is opened, stored gas from the pressure vessel escapes through the outlet vents 22 in a radial direction. The cold gas inflator has a fragment screen 20a to capture fragments from the ruptured burst disk so that these fragments will not wind up in the airbag. With reference to FIG 2, the first cylindrical member 21 has a conduit portion 26 comprising a plurality of outlet vents 22 around the circumference thereof. The fragment screen 20a shown in FIG. 2 is disposed between the end cap 4 and the end plate 27 of the first cylindrical member 21.

There are several methods of controlling the gas flow rate, One method of controlling the gas flow rate is to increase/decrease the diameter of the outlet vents 22. Another method is to increase/decrease the diameter of the discharge opening 14. Lastly, a regulating orifice plate 18 can be installed in the second cylindrical member 10 to control the rate of gas discharge. In FIG. 1 the orifice plate 18 is mounted flush against the first cylindrical member 21 and secured thereof by laser welding. The stored gas 11 flows through the orifice 19 of the orifice plate 18. The area of the orifice 19 is smaller than the area of the discharge opening 14. In FIG. 2 the orifice plate is installed on a ledge 25 of the pressure vessel portion 25 of the first cylindrical member 21. Unlike the orifice plate in FIG. 1, the orifice plate 18 is not welded to the first cylindrical member 21. The orifice plate is prevented from contacting the end plate 27 by an annular ledge 28. Moreover, the orifice plate is prevented from sliding toward the second cylindrical member 10 because of the curls 24.

FIG. 3 shows an alternate embodiment not covered by the present invention where the orifice plate 18 is installed upstream in the second cylindrical member 10. The presence of a upstream orifice plate 18 affects the flow rate of the stored gas 11 through the discharge opening 14 since the discharge opening 14 has a greater area than the orifice 19. A first quantity of stored gas 11, which is the stored gas 11 between the discharge opening 14 and the orifice plate 18, flows through the discharge opening 14. On the other hand, a second quantity of stored gas 11, which is stored gas 11 between the orifice plate 18 and the first end 6, must flow through both the orifice 19 and the discharge opening 14. It is preferred that the orifice plate 18 be disposed in a position closer to the second end 7 of the second cylindrical member 10 than the first end 6 thus limiting the amount of unthrottled gas. By doing so the initial onset of the pressure time curve may be reduced thus aiding the inflator in meeting out of position requirements during occupant level testing.

An axial flow cold gas inflator not claimed by the invention is shown in FIG. 4. Unlike the radial flow cold gas inflator, the axial flow cold gas inflator has an opening device mounted at angle C. In FIG. 4 the angle C is the acute angle formed by the interception of the longitudinal axis B of the opening device and the longitudinal axis A of the second cylindrical member 10. The opening device could be mounted at any angle C, but the preferred angle C is greater than 10°.

By mounting the opening device at an angle, a large flow area is allowed for the escaping gas in the axial direction which allows for superior packaging schemes over conventional radial flow concepts which convert the gas to axial flow via an external manifold (not shown). In is preferred that the opening device 1 is recessed within the axial flow coupler 31 so that no portion of the opening device 1 extends beyond the cross-section of the second cylindrical member 10.

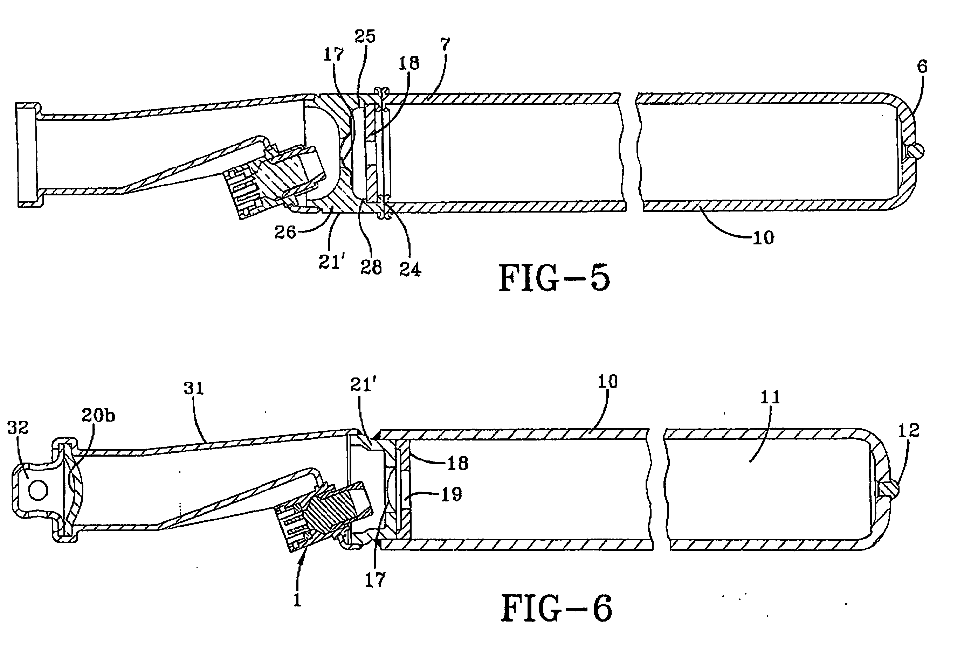

The axial flow cold gas inflators depicted in FIGS. 4 and 5 have slightly different designs. In FIG. 4 the first cylindrical member 21' is telescopically inserted into the second cylindrical member 10, and the two parts are welded together. On the other hand, in FIG. 5 the first cylindrical member 21' is friction welded to the second cylindrical member 10 requiring the portions of the two parts welded together have substantially the same radius. In FIG. 4, the orifice plate 18 is laser welded to the first cylindrical member, whereas the orifice plate 18 in FIG. 5 is secured in place due to a ledge 25 and the curls 24, which was discussed above.

The axial flow cold gas inflator has an opening device that is similar to the opening device for FIG. 1, which was discussed above. Upon rupturing of the burst disk 17, the stored gas 11 is first directed in an axial direction via the conduit portion 26 of the first cylindrical member 21' and is further directed in the same direction via the axial flow coupler 31. The stored gas then passes through the optional fragment screen 20b at the end of the axial flow coupler. The axial flow coupler directs the gas to flow in an axial direction as it exits the cold gas inflator. In order to adhere to U.S.A. Department of Transportation regulations, the axial flow cold gas inflator can have a flow diverter 32 attached to the end of the axial flow coupler 31 as shown in FIG. 6. The flow diverter 32 changes the gas flow of the cold gas inflator from axial flow to radial flow.

## Claims

1. An inflator comprising: a first cylindrical member (21) having a pressure vessel portion and a conduit portion for directing inflation gas (11), the pressure vessel portion has an annular end plate (27) extending radially inward defining a discharge opening (14), a second cylindrical member (10) having a first end (6) that is closed and a second end (7) that is fused to the pressure vessel portion of the first cylindrical member by friction welding whereby curls (24) are formed therefrom; a burst disk (17) having a substantially dome shape with a peak of the dome facing away from the second cylindrical member (10), the burst disk is attached to the end plate (27), wherein the burst disk, the first cylindrical member and the second cylindrical member define a pressure vessel; **characterised by** an orifice plate (18) having an orifice (19) therethrough wherein the orifice is smaller than the discharge opening (14), the first cylindrical member (21) has a annular ledge (28) disposed within the pressure vessel portion thereof for precluding the orifice plate from contacting the end plate, the curls (24) preclude the orifice plate from sliding into the second cylindrical vessel, and said orifice plate (18) is located in the first cylindrical member (21).

2. An inflator according to claim 1 wherein the center of the burst disk (17) is less than 8.0 mm away from an opening device (1), the opening device comprising an igniter (3) and a nozzle (8) for focusing the output energy of the igniter.

3. An inflator according to claim 1 or 2 wherein the nozzle (8) has an opening (9) that is.less than the size of the discharge opening (14), the opening in the nozzle has a diameter with a preferred range of 2 mm to 8 mm.

4. An inflator according to any of claims 1 - 3 wherein the opening device (1) is positioned so that a longitudinal axis (B) of the opening device is essentially parallel with a longitudinal axis (A) of the second cylindrical member (10).

5. An inflator according to any of claims 1 - 4 wherein the conduit portion of the first cylindrical member (21) has a plurality of holes (22) therethrough around the circumference thereof for diffusing the inflation gas (11) in a radial direction.

6. An inflator according to claim 1 wherein the conduit portion (26) of the first cylindrical portion directs inflation gas (11) from the pressure vessel in essentially a parallel direction to a longitudinal axis (A) of the second cylindrical member (10) and the opening device (1) is positioned at a non-zero angle relative to the longitudinal axis of the second cylindrical member.

7. An inflator according to claim 6 wherein an acute angle formed between a longitudinal axis (B) of the opening device (1) and the longitudinal axis (A) of the second cylindrical member (10) is greater than 10°.

8. An inflator according to claim 6 or 7 further comprising an axial flow coupler for further directing the flow of stored gas (11) from the pressure vessel in a direction parallel to the longitudinal axis (A) of the second cylindrical member (10), the axial flow coupler is adjacent to the first cylindrical member (21) which is adjacent to the second cylindrical member.

9. An inflator according to any of claims 6-8 wherein the opening device (1) is recessed within the axial coupler so that no portion of the opening device extends beyond a width of the second cylindrical member (10).

10. An inflator according to any of claims 6-8 further comprising a flow diverter for diverting the gas flow to a direction that is essentially perpendicular to the longitudinal axis (A) of the second cylindrical member (10).

## Patentansprüche

1. Aufblasvorrichtung, die aufweist: ein erstes zylindrisches Element (21) mit einem Druckbehälterabschnitt und einen Kanalabschnitt für das Lenken von Aufblasgas (11), wobei der Druckbehälterabschnitt eine ringförmige Endplatte (27) aufweist, die sich radial nach innen erstreckt, wobei sie eine Austrittsöffnung (14) definiert wird; ein zweites zylindrisches Element (10) mit einem ersten Ende (6), das geschlossen ist, und einem zweiten Ende (7), das mit dem Druckbehälterabschnitt des ersten zylindrischen Elementes durch Reibschweißen verschweißt ist, wobei Wülste (24) daraus gebildet werden; eine Berstscheibe (17) mit einer im Wesentlichen gewölbten Form, wobei ein Scheitel der Wölbung weg vom zweiten zylindrischen Element (10) liegt, wobei die Berstscheibe an der Endplatte (27) befestigt ist, wobei die Berstscheibe, das erste zylindrische Element und das zweite zylindrische Element einen Druckbehälter definieren; **gekennzeichnet durch** eine Drosselblende (18) mit einer Öffnung (19) dort hindurch, wobei die Öffnung kleiner ist als die Austrittsöffnung (14); dass das erste zylindrische Element (21) einen ringförmigen Absatz (28) aufweist, der innerhalb des Druckbehälterabschnittes davon angeordnet ist, um auszuschließen, dass die Drosselblende die Endplatte berührt; dass die Wülste (24) ausschließen, dass die Drosselblende in den zweiten zylindrischen Behälter gleitet; und dass die Drosselblende (18) im ersten zylindrischen Element (21) angeordnet ist.

2. Aufblasvorrichtung nach Anspruch 1, wobei die Mitte der Berstscheibe (17) weniger als 8,0 mm weg von einer Öffnungsvorrichtung (1) ist, wobei die Öffnungsvorrichtung eine Zündeinrichtung (3) und eine Düse (8) für das Fokussieren der Ausgangsenergie der Zündeinrichtung aufweist.

3. Aufblasvorrichtung nach Anspruch 1 oder 2, wobei die Düse (8) eine Öffnung (9) aufweist, die kleiner ist als die Abmessung der Austrittsöffnung (14), wobei die Öffnung in der Düse einen Durchmesser mit einem bevorzugten Bereich von 2 mm bis 8 mm aufweist.

4. Aufblasvorrichtung nach einem der Ansprüche 1 bis 3, wobei die Öffnungsvorrichtung (1) so positioniert ist, dass eine Längsachse (B) der Öffnungsvorrichtung im Wesentlichen parallel zu einer Längsachse (A) des zweiten zylindrischen Elementes (10) ist.

5. Aufblasvorrichtung nach einem der Ansprüche 1 bis 4, wobei der Kanalabschnitt des ersten zylindrischen Elementes (21) eine Vielzahl von Löchern (22) dort hindurch um den Umfang dessen für das Ausbreiten des Aufblasgases (11) in einer radialen Richtung aufweist.

6. Aufblasvorrichtung nach Anspruch 1, wobei der Kanalabschnitt (26) des ersten zylindrischen Abschnittes das Aufblasgas (11) vom Druckbehälter in einer im Wesentlichen parallelen Richtung zu einer Längsachse (A) des zweiten zylindrischen Elementes (10) lenkt und die Öffnungsvorrichtung (1) unter einem Winkel von nicht Null relativ zur Längsachse des zweiten zylindrischen Elementes positioniert ist.

7. Aufblasvorrichtung nach Anspruch 6, wobei ein spitzer Winkel, der zwischen einer Längsachse (B) der Öffnungsvorrichtung (1) und der Längsachse (A) des zweiten zylindrischen Elementes (10) gebildet wird, größer ist als 10°.

8. Aufblasvorrichtung nach Anspruch 6 oder 7, die außerdem ein axiales Strömungskupplungsstück für das weitere Lenken des Stromes des gespeicherten Gases (11) vom Druckbehälter in einer Richtung parallel zur Längsachse (A) des zweiten zylindrischen Elementes (10) aufweist, wobei das axiale Strömungskupplungsstück dem ersten zylindrischen Element (21) benachbart ist, das dem zweiten zylindrischen Element benachbart ist.

9. Aufblasvorrichtung nach einem der Ansprüche 6 bis 8, wobei die Öffnungsvorrichtung (1) innerhalb des axialen Kupplungsstückes so ausgespart ist, dass sich kein Abschnitt der Öffnungsvorrichtung über eine Breite des zweiten zylindrischen Elementes (10) hinaus erstreckt.

10. Aufblasvorrichtung nach einem der Ansprüche 6 bis 8, die außerdem eine Strömungsablenkeinrichtung für das Ablenken des Gasstromes in eine Richtung aufweist, die im Wesentlichen senkrecht zur Längsachse (A) des zweiten zylindrischen Elementes (10) verläuft.

## Revendications

1. Dispositif de gonflement, comprenant : un premier élément cylindrique (21), comportant une partie de récipient sous pression et une partie de conduit pour diriger le gaz de gonflement (11), la partie du récipient sous pression comportant une plaque d'extrémité annulaire (27) s'étendant radialement vers l'intérieur, définissant une ouverture de décharge (14), un deuxième élément cylindrique (10), comportant une première extrémité (6) fermée et une deuxième extrémité (7) fixée par fusion sur la partie du récipient sous pression du premier élément cylindrique par soudage par friction, entraînant ainsi la formation de bourrelets (24) ; un disque de rupture (17) ayant pratiquement une forme bombée, un sommet de la forme bombée étant orienté à l'écart du deuxième élément cylindrique (10), le disque de rupture étant fixé sur la plaque d'extrémité (27), le disque de rupture, le premier élément cylindrique et le deuxième élément cylindrique définissant un récipient sous pression, **caractérisé par** une plaque à orifice (18) comportant un orifice (19) la traversant, l'orifice étant plus petit que l'ouverture de décharge (14), le premier élément cylindrique (21) comportant une moulure annulaire (28) agencée dans la partie du récipient sous pression pour empêcher un contact entre la plaque à orifice et la plaque d'extrémité, les bourrelets (24) empêchant un glissement de la plaque à orifice dans le deuxième élément cylindrique et ladite plaque à orifice (18) étant agencée dans le premier élément cylindrique (21).

2. Dispositif de gonflement selon la revendication 1, dans lequel le centre du disque de rupture (17) est éloigné de moins de 8,0 mm d'un dispositif d'ouverture (1), le dispositif d'ouverture comprenant un dispositif d'allumage (3) et une buse (8) pour focaliser l'énergie de sortie du dispositif d'allumage.

3. Dispositif de gonflement selon les revendications 1 ou 2, dans lequel la base (8) comporte une ouverture (9) ayant une taille inférieure à celle de l'ouverture de décharge (14), l'ouverture dans la buse ayant un diamètre compris dans un intervalle préféré allant de 2 mm à 8 mm.

4. Dispositif de gonflement selon l'une quelconque des revendications 1 à 3, dans lequel le dispositif d'ouverture (1) est positionné de sorte qu'un axe longitudinal (B) du dispositif d'ouverture est pratiquement parallèle à un axe longitudinal (A) du deuxième élément cylindrique (10).

5. Dispositif de gonflement selon l'une quelconque des revendications 1 à 4, dans lequel la partie de conduit du premier élément cylindrique (21) comporte plusieurs trous (22) la traversant, formés autour de la circonférence correspondante pour diffuser le gaz de gonflement (11) dans une direction radiale.

6. Dispositif de gonflement selon la revendication 1, dans lequel la partie de conduit (26) de la première partie cylindrique dirige le gaz de gonflement (11) provenant du récipient sous pression dans une direction pratiquement parallèle à un axe longitudinal (A) du deuxième élément cylindrique (10), le dispositif d'ouverture (1) étant positionné au niveau d'un angle non égal à zéro par rapport à l'axe longitudinal du deuxième élément cylindrique.

7. Dispositif de gonflement selon la revendication 6, dans lequel un angle aigu formé entre un axe longitudinal (B) du dispositif d'ouverture (1) et l'axe longitudinal (A) du deuxième élément cylindrique (10) est supérieur à 10°.

8. Dispositif de gonflement selon les revendications 6 ou 7, comprenant en outre un coupleur à écoulement axial pour diriger l'écoulement du gaz stocké (11) provenant du récipient sous pression dans une direction parallèle à l'axe longitudinal (A) du deuxième élément cylindrique (10), le coupleur à écoulement axial étant adjacent au premier élément cylindrique (21) qui est adjacent au deuxième élément cylindrique.

9. Dispositif de gonflement selon l'une quelconque des revendications 6 à 8, dans lequel le dispositif d'ouverture (1) est évidé dans le coupleur axial, de sorte qu'aucune partie du dispositif d'ouverture ne s'étend au-delà d'une largeur du deuxième élément cylindrique (10).

10. Dispositif de gonflement selon l'une quelconque des revendications 6 à 8, comprenant en outre un déviateur d'écoulement pour dévier l'écoulement du gaz dans une direction pratiquement perpendiculaire à l'axe longitudinal (A) du deuxième élément cylindrique (10).
